# EUROPEAN PATENT SPECIFICATION

(11) **EP 0 992 380 B1**
(45) Date of publication and mention of the grant of the patent: **09.03.2005**
(21) Application number: 99118620.6
(22) Date of filing: 21.09.1999
(51) Int. Cl.: B60J 1/18, B60J 5/04

(54) **Plastic and metal motor vehicle door and manufacturing method**
Kraftfahrzeugtür aus Kunststoff oder Metall und Herstellungsverfahren
Porte en plastique et métal d'un véhicule à moteur et méthode de fabrication

(30) Priority: 09.10.1998 IT TO980854
(43) Date of publication of application: 12.04.2000
(73) Proprietor: FIAT AUTO S.p.A., 10135 Torino (IT)
(72) Inventor: Stramaccia, Paolo, 10095 Gruglasco (TO) (IT)
(74) Representative: Di Francesco, Gianni

(56) References cited:
- EP-A- 0 363 744
- EP-A- 0 773 126
- FR-A- 2 416 809

## Description

The present invention relates to a motor vehicle door presenting a plastic structural frame and with a metal window run channel. According to the invention, the union of the two metal and plastic parts is achieved by means of co-moulding.

Metal and plastic doors, as well as whole plastic doors, are already known in the field. However, in the case of doors made both of plastic and metal, the supporting structure (structural frame) has always been made of metal, plastic being used for the external "skin" for aesthetic purpose. However, this solution entails problems related to the union of the metal and plastic parts, which is generally achieved by means of sizing, since this union is supposed to be perfectly done in order not to present a poor finishing.

In the case of whole plastic doors, with the exception of the back door with no sliding window, the problem to be solved is that of making a quite rigid contour of the window, that is the window run channel. In fact, in case said contour is not rigid enough, aerodynamic noises would be produced due to improper contact between the upper edge of the door and the seal of the door ring. In worse situations, the upper part of the door could be sucked out due to the depression generated when the motor vehicles is moving at high speed.

It is an object of the present invention to provide a door and a method to produce it, which can solve the above mentioned problems.

This object is achieved by means of a motor vehicle door, which presents the characteristics of claim 1.

Correspondingly, the procedure to produce a motor vehicle door according to the invention, comprises the steps indicated in claim 3.

Additional characteristics and advantages will become clear from the following description, which is provided as a non-restrictive example, and refers to the appended drawings, in which:
- figure 1 is a side view of the structural frame of a door made according to the procedure of the invention, and
- figure 2 is a section view along the line II-III in figure 1.

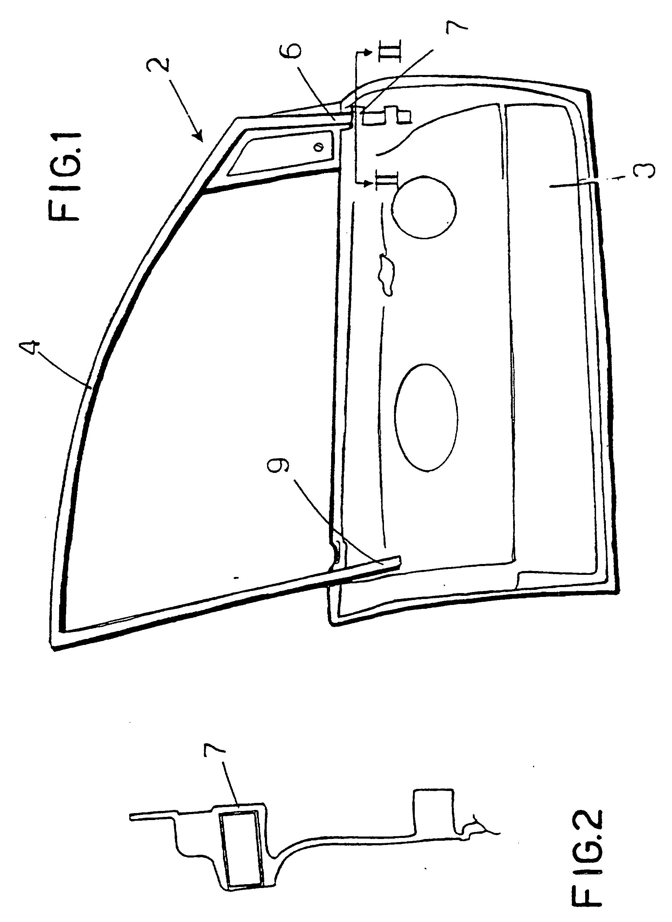

With reference to the figures, reference number 2 indicates, on the whole, the structural frame of a motor vehicle, consisting of a lower solid part 3 forming the containing structure of all the devices of the door (window, window regulator, electrical motors, air channels etc..) and of an upper hollow part 4, consisting solely of the contour of the window, that is the window run channel that guides the windows while it is moving. The lower part 3 is made of plastic material by means of moulding, while the upper part 4 is made of metal by means of drawing or bending. The two parts according to the present invention are united by means of co-moulding while the lower part is made. In order to achieve a better union between the two parts, the front end 6 (taking into account the direction in which the motor vehicle is proceeding) of the channel (upper part), which is let into the plastic of the lower part 3, is surrounded by reinforcement tabs 7 (fig.2). This is allowed by the fact that at the front part of the door the window remains behind the edge of the door and slides into a window run channel which is mounted in a following stage. On the other hand, the back end 9 of the channel, which is let into the plastic of part 2, is kept free to let the window slide, by means of a proper insert which is removed after the co-moulding of the two parts.

According to the present invention, the procedure to make the structural frame of the door consists of the following phases. First, a mould for plastic material is prepared so that it presents form and dimensions which are the correct ones for the door that must be produced. Then, the upper part (channel) is positioned inside the mould in a predetermined position. At this moment the lower part is made by means of moulding and the union of the two parts of the structural frame, the upper part and the lower part, is achieved by means of co-moulding. Finally the piece that has thus been made is removed from the old, after it has cooled down so that it can become stiff.

## Claims

1. A motor vehicle door the structural frame (2) of which consists of a lower plastic solid part (3) forming the containing structure for the devices of the door itself, and of an upper hollow metal part (4) serving as window run channel, **characterised in that** said two parts are united by means of co-moulding.

2. A motor vehicle door as claimed in claim 1, **characterised in that** the plastic part is provided with reinforcement tabs (7) adapted to surround at least one end of the upper channel-shaped part.

3. Procedure to make a structural frame for motor vehicle doors as claimed in claim 1, **characterised in that** it consists of the following three stages:
- preparation of a mould the form and dimensions of which are such to fit the door that is to be made;
- introduction of the upper part (4) into the mould in a pre-determined position;
- moulding of the lower plastic part (3) while co-moulding the two upper (4) and lower (3) parts;
- cooling and removal of the piece from the mould.

## Patentansprüche

1. Fahrzeugtür, deren Tragrahmen (2) aus einem festen unteren Kunststoffteil (3), das die Aufnahme für die Einrichtungen der Tür selbst bildet, und ein hohles oberes Metallteil (4), das als Fensterlaufkanal dient, besteht, **dadurch gekennzeichnet, dass** die zwei Teile mittels Verbundspritzen miteinander vereint sind.

2. Fahrzeugtür nach Anspruch 1, **dadurch gekennzeichnet, dass** das Kunststoffteil mit Verstärkungslaschen (7) versehen ist, die derart ausgebildet sind, dass sie zumindest ein Ende des kanalförmigen oberen Teils umgeben.

3. Verfahren zum Herstellen eines Tragrahmens für Fahrzeugtüren nach Anspruch 1, **dadurch gekennzeichnet, dass** es aus den folgenden drei Phasen besteht:
- Vorbereiten einer Form, deren Gestalt und Abmessungen derart sind, dass die herzustellende Tür aufgenommen werden kann,
- Einbringen des oberen Teils (4) in die Form in eine vorbestimmte Stellung,
- Spritzen des unteren Kunststoffteils (3) während das obere Teil (4) und das untere Teil (3) verbundgespritzt werden,
- Abkühlen und Herausnehmen des Teils aus der Form.

## Revendications

1. Porte de véhicule à moteur, dont la structure de tête (2) est constituée d'une partie pleine en plastique inférieure (3) formant la structure de logement pour les dispositifs de la porte proprement dite, et d'une partie métallique creuse supérieure (4), servant de glissière pour le coulissement de la vitre, **caractérisée en ce que** lesdites deux parties sont assemblées par voie de co-moulage.

2. Porte de véhicule à moteur selon la revendication 1, **caractérisée en ce que** la partie en plastique est dotée de languettes de renforcement (7) conçues de manière à entourer au moins une extrémité de la partie supérieure en forme de glissière.

3. Procédé de fabrication d'une structure de tête des portes de véhicule à moteur selon la revendication 1, **caractérisée en ce qu'**elle comprend les trois étapes consistant à :
- préparer un moule dont la forme et les dimensions sont établies de manière à s'adapter à la porte devant être fabriquée ;
- introduire la partie supérieure (4) dans le moule dans une position prédéterminée ;
- mouler la partie en plastique inférieure (3) tout en comoulant les deux parties supérieure (4) et inférieure (3) ;
- refroidir et extraire la pièce du moule.
